# EUROPÄISCHE PATENTSCHRIFT

(11) **EP 1 378 536 B1**
(45) Veröffentlichungstag und Bekanntmachung des Hinweises auf die Patenterteilung: **27.01.2010**
(21) Anmeldenummer: 03014231.9
(22) Anmeldetag: 25.06.2003
(51) Int. Cl.: C08J 5/10, C08K 5/20, D06M 15/41, B24D 3/28, B24D 11/00

(54) **Schleifscheibengewebeeinlagen**
Fabric insert for grinding wheels
Inserts de tissu pour des meules

(30) Priorität: 05.07.2002 DE 10230573
(43) Veröffentlichungstag der Anmeldung: 07.01.2004
(73) Patentinhaber: Hexion Specialty Chemicals GmbH, 58642 Iserlohn-Letmathe (DE)
(72) Erfinder: Dern, Hans-Jürgen, Dr., 58708 Menden (DE); Stehl, Volker, 58762 Altena (DE)

(56) Entgegenhaltungen:
- GB-A- 1 082 236
- GB-A- 1 392 087
- US-B1- 6 261 156
- PATENT ABSTRACTS OF JAPAN vol. 1999, no. 14, 22. Dezember 1999 (1999-12-22) -& JP 11 244991 A (GUN EI CHEM IND CO LTD), 14. September 1999 (1999-09-14)

## Beschreibung

Die Erfindung betrifft Schleifscheibengewebeeinlagen.

Kunstharzgebundene Formkörper werden in der Regel durch Zusammenpressen und anschließendes Härten einer mit einem duroplastischen Harz versehenen Gewebeeinlage mit einer Formkörpermasse, bestehend aus Bindemittel, Füll- und Zusatzstoffen, hergestellt. Die technisch bedeutendsten kunstharzgebundenen Formkörper mit Gewebeeinlage sind Schleifscheiben

Zu ihrer Herstellung wird die mit dem duroplastischen Bindemittel oder Bindemittelgemisch imprägnierte Gewebeeinlage vorgefertigt, d.h., ein Gewebe wird mit einem duroplastischen Harz, Harzgemisch oder einem Gemisch aus einem latenten Härter und einem duroplastischen Harz oder Harzgemisch getränkt und das Harz so weit getrocknet und unter Umständen vorgehärtet, daß es nicht mehr fließfähig ist, daß es aber bei den Härtungstemperaturen der Schleifmittel noch mit dem Bindemittel der Schleifkörpermasse reagieren und zu einem einheitlichen Polymersystem vernetzen kann (vergl.Gardziella, Pilato, Knop "Phenolic Resins", Springer Verlag 2000, S.333 bis 336). Leider ist auch das getrocknete Harz nicht absolut klebfrei. Andererseits werden die vorgefertigten und gegebenenfalls bereits zu Scheiben gestanzten Gewebeeinlagen aufeinandergestapelt und als Stapel transportiert und gelagert. Dabei verkleben die einzelnen Gewebeeinlagen wieder miteinander und müssen dann vor dem Einsatz per Hand wieder vereinzelt werden.

Um ein einwandfreies Vereinzeln der Gewebeeinlagen zu gewährleisten, wird ansonsten jeweils zwischen den Gewebeeinlagen eine Trennfolie, bevorzugt ein Silikonpapier eingebracht, das jeweils nach dem Vereinzeln als Abfall anfällt. Dies ist einerseits teuer und bedingt zusätzlichen Arbeitsaufwand, der von Automaten klaglos bewältigt wird, bei manuellem Einlegen jedoch zu einer enormen Mehrbelastung der Mitarbeiter führt.

Die für den Fachmann naheliegende Methode zum Erreichen eines Trenneffektes der Gewebeeinlagen durch Zusätze von üblichen Wachsen zum Tränkharz kann nicht angewandt werden, da diese Zusätze auch gegenüber der Schleifkörpermasse als Trennmittel wirken und somit einen Festigkeitsabbau der resultierenden Schleifscheiben bewirken.

Die GB 1,082,236 offenbart ein Verfahren zur Herstellung einer wässrigen Emulsion zur Imprägnierung von faserigem Material, wie z.B. hartes Papier. Die Emulsion enthält Phenols Formaldehydharz und ein Stearamid oder Oleamid als Fettsäureamide. Dieses Dokument beabsichtigt die Imprägnierung von faserigem Material für die Herstellung von gedruckten Verdrahtungen. Es sollen Defekte nach dem Stanzprozess vermieden werden.

Die JP(A)112444991 beschreibt ein Herstellungsverfahren für umhüllten Sand, der für feuerfeste Formen geeignet ist. Es wird u. a. eine Resol-Phenolharz-Emulsion/Suspension verwendet. Der Einsatz von z.B. Ethylen-bis-stearmid als Schmiermittel ist beschrieben.

Die GB-A-1,392,087 offenbart die Imprägnierung von gebündelten Glasfasern zum Einsatz in Reifen, wobei die imprägnierung ein Fettsäureamid enthält.

Es ist Aufgabe der Erfindung, Gewebeeinlagen für Schleifscheiben herzustellen, die sich ohne Verwendung einer Trennfolie stapeln lassen und die dabei nicht verkleben und sich nach der Lagerung bei Gebrauch wieder einfach und sicher vereinzeln lassen und die die gleiche Qualität der Schleifscheiben gewährleisten, die beim Einsatz der unter Verwendung von Trennfolien gestapelten Gewebeeinlagen erhalten wird.

Die Lösung der Aufgabe erfolgt durch die Merkmale gemäß der Ansprüche 1 bis 6.

Es wurde gefunden, daß mit duroplastischem Harz versehene Gewebeeinlagen erhalten werden, die sich problemlos stapeln und auch nach Lagerung bei höheren Temperaturen wieder einfach und sicher vereinzeln lassen und die die Qualität der mit ihnen hergestellten Schleifscheiben nicht vermindern, wenn dem zur Imprägnieren der Gewebe verwendeten duroplastischen Harz oder Gemisch aus einem latenten Härter und einem duroplastischen Harz eines oder mehrerer Produkte aus der Gruppe der Fettsäureamide oder der substituierten Fettsäureamide zugegeben werden.

Die zugegebenen Zusätze aus der Gruppe der Fettsäureamide oder der substituierten Fettsäureamide sind bei Raumtemperatur feste bis halbfeste Substanzen oder Substanzgemische der allgemeinen Formeln 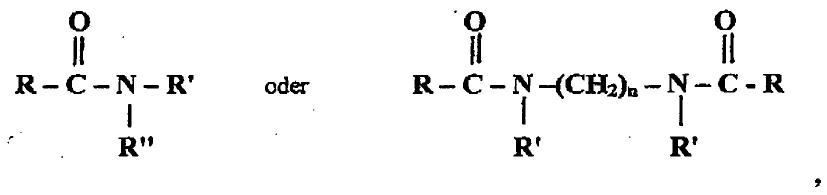 worin
n eine Zahl im Bereich von 1 bis 6 ist,
R eine verzweigte oder unverzweigte Alkylkette mit 10 bis 30 C-Atomen bedeutet
und R' und R" gleich oder verschieden sein können und entweder Wasserstoff oder eine verzweigte oder unverzweigte Alkylkette mit 1 bis 6 C-Atomen bedeuten.
Bevorzugte Produkte aus dieser Gruppe sind Oleamid, Behenamid, Stearamid und insbesondere Ethylenbisstearamid.

Wenn Gewebe mit duroplastischen Harzen oder Gemischen aus latentem Härter und duroplastischen Harz (Bindemittel oder Bindemittelgemisch) getränkt sind, die diese Produkte enthalten, so wirken diese Zusätze als Trennmittei zwischen den einzelnen Lagen der imprägnierten Gewebe und verhindern beim Stapeln ein Verkleben.

Überraschenderweise aber wirken diese Zusätze nicht als Trennmittel zwischen dem duroplastischen Bindemittel oder Bindemittelgemisch und dem Gewebe, so daß nach dem Härten ein einwandfreier Verbund erhalten wird, und sie wirken nicht als Trennmittel zwischen der Gewebeeinlage und der mit ihr verpressten Schleifkörpermasse, so daß nach der Härtung eine vollständige homogene Vernetzung zwischen dem Imprägnierharz des Gewebes und dem Bindemittel der Schleifkörpermasse erhalten und damit die gewünschte Festigkeit und Haltbarkeit der Schleifscheibe erhalten wird.

Diese Wirkung der Zusätze aus der Gruppe der Fettsäureamide oder der substituierten Fettsäureamide zu Imprägnierharzen und damit auch die erfindungsgemäße Herstellung der entsprechenden Gewebeeinlagen läßt sich nicht nur bei der Herstellung von Schleifscheiben einsetzen, sondern generell bei der Herstellung von kunstharzgebundenen Formkörpern, die mit Gewebeeinlagen verstärkt sind.

Die Verwendung derartiger Produkte aus der Gruppe der Fettsäureamide oder der substituierten Fettsäureamide mit Epoxidharzen oder Phenolharzen ist an sich bekannt.
So dienen z.B. derartige Fettamide gemäß JP-A 10130462 (C.A 129:55251) als Trennmittel in Epoxidharzformulierungen.
Bindemittel aus Phenolharz kombiniert mit substituierten und unsubstituierten Fettsäureamiden werden vornehmlich als Bindemittel für Sand bei der Herstellung von Formen im Gießereisektor beschrieben [JP-A 60111734 (C.A. 103:182359) oder JP-A 57209741 (C.A.98-165573)].
Gemäß einer Untersuchung über den Einfluß von Additiven auf das Fließ- und Härtungsverhalten von Phenolharz-Formmassen (C.A. 104:34743) wurde festgestellt, daß mit zunehmendem Gehalt an Trennmitteln das Fließverhalten verbessert wird, aber auch, daß mit zunehmender Menge von z.B. Ethylenbisstearylamid die Durchhäftungsrate verschlechtert wird. Damit ist für den Fachmann zu erwarten, daß sich auch die Festigkeiten von mit diesen Zusätzen hergestellten Schleifscheiben vermindern.

Inden erfindungsgemäßen Gewebeeinlagen für Schleifscheiben werden die Produkte aus der Gruppe der Fettsäureamide oder der substituierten Fettsäureamide dem Bindemittel oder Bindemittelgemisch (Tränkharz) in einer Menge von 1 bis 15 Gew.-%, bevorzugt von 3 bis 5 Gew.-%, bezogen auf die Menge des Tränkharze zugegeben. Viele dieser Fettsäureamide oder substituierten Fettsäureamide sind nicht methanollöslich und können daher in der Regel nicht in die erfindungsgemäß verwendeten Bindemittel eingearbeitet werden. Die Zugabe erfolgt daher bevorzugt in Form einer Dispersion, die ein stabiles Einarbeiten in die methanolische Bindemittelmischung erlaubt.

Als duroplastische Bindemittel oder Bindemittelgemische für die Formkörpermassen, insbesondere für die Schleifkörpermassen können die für diese Mischungen an sich bekannten festen Pulverharze auf der Basis von Phenol-, Alkylphenol-, Epoxid-, Polyesteroder Polyurethanharzen, aber auch Pulverlacke und reaktive Gruppen enthaltende Pulverlackrückstände sowie Flüssigharze und Mischungen aus festen und flüssigen duroplastischen Harzen verwendet werden, die, zusammen mit einem latenten Härter, in einer Menge von 5 bis 20 Gew.-%, bevorzugt von 10 Gew.-%, bezogen auf das Gesamtgewicht der Formkörpermasse, eingesetzt werden.

Bevorzugte duroplastische Harze sind Novolake. Der bevorzugte latente Härter für die Novolake ist Hexamethylentetramin, das dem Novolak in einer Menge von 3 bis 16 Gew.-%, bezogen auf das Gewicht des Novolaks, zugemischt wird.

Als Novolake sind alle im sauren Medium hergestellten Kondensationsprodukte aus phenolischen Verbindungen und einem Aldehyd, insbesondere Formaldehyd in einem molaren Verhältnis von phenolischer Verbindung zu Aldehyd von 1 : 0,9 bis 1: 0,2 und einem Schmelzpunkt von 50 bis 110°C einsetzbar.

Als phenolische Verbindungen können ein- oder mehrkernige Phenole oder Gemische der genannten Verbindungsklasse eingesetzt werden, und zwar sowohl ein- als auch mehrkemige Phenole. Beispiele hierfür sind das Phenol selbst, sowie dessen alkylsubstituierten Homologe, wie o-, m- oder p-Kresol, Xylole oder höher alkylierte Phenole, außerdem halogensubstituierte Phenole, wie Chlor- oder Bromphenol und mehrwertige Phenole wie Resorcin oder Brenzkatechin, sowie mehrkernige Phenole wie Naphthole, Bisphenol A oder Bisphenol F.

Das Phenol bzw. die phenolische Verbindung wird mit Aldehyd, insbesondere mit Formaldehyd oder einer Formaldehyd abspaltenden Verbindung zu dem gewünschten Novolak umgesetzt. Die Novolake können durch übliche Modifizierungsmittel, wie z.B. Epoxidharze, Kautschuke, Polyvinylbutyral und anorganische Zusätze modifiziert sein.

Zur Imprägnierung der erfindungsgemäßer Gewebeeinlagen für Schleifscheiben werden im Prinzip die gleichen Bindemittelarten verwendet, wie die Bindemittel der Formkörpermassen. Sofern es nicht die jeweils gleichen Bindemittel oder Bindemittelgemische sind, werden sie so ausgewählt, daß sie mit den Bindemitteln der Formkörpermasse vernetzen und daß sie möglichst im gleichen Temperatur- und Zeitraum wie diese härten. Die zur Imprägnierung eingesetzten Bindemittel müssen in flüssiger Form vorliegen, d.h., entweder als Flüssigharz oder als Lösung oder Dispersion. In der Regel werden methanolische Lösungen eingesetzt und zwar sowohl Resol- als auch Novolak-Lösungen sowie Resol und Novolak enthaltende Lösungen.

Den als Imprägnierharze eingesetzten Bindemitteln oder Bindemittelgemischen werden vor dem Imprägniervorgang 1 bis 15 Gew.-% eines oder mehrerer Produkte aus der Gruppe der Fettsäureamide oder der substituierten Fettsäureamide zugegeben und damit ein neues Imprägniermittel für Gewebeeinlagen hergestellt. Mit diesem Imprägniermittel erfolgt die Imprägnierung des Gewebes in an sich bekannter Weise.

Die erfindungsgemäßen Imprägniermittel zur Herstellung von imprägnierten Gewebeeinlagen für kunstharzgebundene Formkörper sind somit Gemische, die ein aus einem in flüssiger Form vorliegenden duroplastischen Bindemittel und 1 bis 15 Gew.-% eines oder mehrerer Produkte aus der Gruppe der Fettsäureamide oder der substituierten Fettsäureamide neben gegebenenfalls weiteren Hilf- und Zusatzstoffen enthalten.
Das duroplastische Bindemittel ist entweder ein duroplastisches Harz oder Harzgemisch oder ein Harz-Härter-Gemisch. Das bevorzugte duroplastische Harz ist entweder ein Resol, ein Novolak oder ein Novolak-Härter-Gemisch. Das bevorzugte duroplastische Harzgemisch ist ein Resol-Novolak-Gemisch in beliebigem Verhältnis der Komponenten miteinander. Das duroplastische Bindemittel ist eine Lösung eines duroplastischen Harzes, Harzgemisches oder eines Harz-Härter-Gemisches, wobei das erfindungsgemäße Lösemittel ein Alkohol, insbesondere Methanol ist.
Die eingesetzten Produkte aus der Gruppe der Fettsäureamide oder der substituierten Fettsäureamide sind bevorzugt wäßrige Dispersionen dieser Produkte.

Die zu imprägnierenden Gewebe können aus natürlichen und künstlichen, anorganischen und organischen Fasern bestehen. Die bevorzugten Gewebe sind Glasfäsergewebe.

Die erfindungsgemäß imprägnierten, getrockneten und gegebenenfalls vorgehärteten und gestanzten Gewebeeinlagen können ohne Verwendung weiterer Trenn- oder Hilfsmittel gestapelt und als Stapel gelagert werden und bei Gebrauch einfach und problemlos vereinzelt werden, um dann in an sich bekannter Weise zur Herstellung von kunstharzgebundenen Formkörpern, insbesondere von Schleifscheiben verwendet zu werden.

## Patentansprüche

1. Schleifscheibengewebeeinlagen, **dadurch gekennzeichnet, dass** diese mit einem duroplastischen Harz, Harzgemisch oder Harz-Härter-Gemisch imprägniert sind, wobei das zur Imprägnierung verwendete Harz, Harzgemisch oder Harz-Härter-Gemisch eine alkoholische Lösung ist, der vor der Imprägnierung als Zusatz eine Substanz aus der Gruppe der Fettsäureamide oder substituierten Fettsäureamide in einer Menge von 1 bis 15 Gew.% bezogen auf die Menge des Harz, Harzgemisch oder Harz-Härter-Gemisches zugegeben wird.

2. Schleifscheibengewebeeinlagen nach Anspruch 1, **dadurch gekennzeichnet, dass** der Zusatz aus der Gruppe der Fettsäureamide oder substituierten Fettsäureamide Ethylerbisstearamid ist.

3. Schleifscheibengewebeeinlagen nach zumindest einem der vorhergehenden Ansprüche, **dadurch gekennzeichnet, dass** das zur Imprägnierung verwendete Harz, Harzgemisch oder Harz-Härter-Gemisch ein Resol ist.

4. Schleifscheibengewebeeinlagen nach zumindest einem der vorhergehenden Ansprüche, **dadurch gekennzeichnet, dass** das zur Imprägnierung verwendete Harz, Harzgemisch oder Harz-Härter-Gemisch ein Novolak oder ein Novolak-Härter Gemisch ist.

5. Schleifscheibengewebeeinlagen nach zumindest einem der vorhergehenden Ansprüche, **dadurch gekennzeichnet, dass** das zur Imprägnierung verwendete Harz, Harzgemisch oder Harz-Härter-Gemisch ein Resoi-Novolak-Gemisch ist.

6. SchleiFscheibengewebeeinlagen nach zumindest einem der vorhergehenden Ansprüche, **dadurch gekennzeichnet, dass** der Zusatz aus der Gruppe der Fettsäureamide oder substituierten Fettsäureamide dem zur Imprägnierung verwendeten Harz, Harzgemisch oder Harz-Härter-Gemisch in Form einer Dispersion vorliegt.

## Claims

1. Grinding disc fabric inserts, **characterized in that** these are impregnated with a thermosetting resin, resin mixture or resin-curing agent mixture, wherein the resin, resin mixture or resin-curing agent mixture used for impregnating is an alcoholic solution which, before impregnating, has added to it, as an additive, a substance from the group of fatty acid amides or substituted fatty acid amides in an amount of 1% to 15% by weight, based on the amount of the resin, resin mixture or resin-curing agent mixture.

2. Grinding disc fabric inserts according to Claim 1, **characterized in that** the additive from the group of the fatty acid amides or substituted fatty acid amides is ethylene bis-stearamide.

3. Grinding disc fabric inserts according to at least one of the preceding claims, **characterized in that** the resin, resin mixture or resin-curing agent mixture used for impregnating is a resol.

4. Grinding disc fabric inserts according to at least one of the preceding claims, **characterized in that** the resin, resin mixture or resin-curing agent mixture used for impregnating is a novolak or a novolak-curing agent mixture.

5. Grinding disc fabric inserts according to at least one of the preceding claims, **characterized in that** the resin, resin mixture or resin-curing agent mixture used for impregnating is a resol-novolak mixture.

6. Grinding disc fabric inserts according to at least one of the preceding claims, **characterized in that** the additive from the group of fatty acid amides or substituted fatty acid amides is added as a dispersion to the resin, resin mixture or resin-curing agent mixture used for impregnating.

## Revendications

1. Inserts en tissu pour meule, **caractérisés en ce qu'**ils sont revêtus d'une résine duroplastique, d'un mélange de résines ou d'un mélange résine-durcisseur, la résine, le mélange de résines ou le mélange résine-durcisseur utilisé(e) pour l'imprégnation étant une solution alcoolique à laquelle on ajoute, avant l'imprégnation, comme additif, une substance du groupe des amides d'acides gras ou des amides d'acides gras substitués en une quantité de 1 à 15% en poids par rapport à la quantité de résine, de mélange de résines ou de mélange résine-durcisseur.

2. Inserts en tissu pour meule selon la revendication 1, **caractérisés en ce que** l'additif du groupe des amides d'acides gras ou des amides d'acides gras substitués est l'éthylènebistéaramide.

3. Inserts en tissu pour meule selon au moins l'une quelconque des revendications précédentes, **caractérisés en ce que** la résine, le mélange de résines ou le mélange résine-durcisseur utilisé(e) pour l'imprégnation est un résol.

4. Inserts en tissu pour meule selon au moins l'une quelconque des revendications précédentes, **caractérisés en ce que** la résine, le mélange de résines ou le mélange résine-durcisseur utilisé(e) pour l'imprégnation est une novolaque ou un mélange novolaque-durcisseur.

5. Inserts en tissu pour meule selon au moins l'une quelconque des revendications précédentes, **caractérisés en ce que** la résine, le mélange de résines ou le mélange résine-durcisseur utilisé(e) pour l'imprégnation est un mélange résol-novolaque.

6. Inserts en tissu pour meule selon au moins l'une quelconque des revendications précédentes, **caractérisés en ce qu'**on ajoute l'additif du groupe des amides d'acides gras ou des amides d'acides substitués à la résine, au mélange de résines ou au mélange de résine-durcisseur utilisé(e) pour l'imprégnation se trouve sous forme d'une dispersion.
